# EUROPEAN PATENT APPLICATION

(11) **EP 2 263 952 A1**
(43) Date of publication of application: **22.12.2010**
(21) Application number: 10166210.4
(22) Date of filing: 16.06.2010
(51) Int. Cl.: B65D 88/54, B65G 67/08, B65G 67/20

(54) **Load system for a container**

(30) Priority: 16.06.2009 NL 2003031
(71) Applicant: Ancra Systems BV, 5281 PL Boxtel (NL)
(72) Inventor: van Leeuwen, Cornelis Johannes Leonardus, 2352 RH, Leiderdorp (NL)
(74) Representative: Verhees, Godefridus Josephus Maria

(57) **Abstract**

A loading system 1 comprises a loading device 3 and a container 5. For the purpose of loading and unloading the container it is moved with its rear side in front of a load/unload opening 19 of a building.

The loading device 3 comprises a conveyor belt 21 which is positioned at a height such that a semi-trailer 7 carrying a container 5 can be manoeuvred under it. The conveyor belt 21 extends from the rear wall 15 to the front wall 13 of the container.

For the purpose of unloading the container 5 it is provided with a further conveyor belt 29 which extends from the rear wall 15 to the front wall 13.

The container 5 is provided with a loading opening 31 in the front wall 13 which can be closed by a loading hatch 33. The container 5 is loaded through the loading opening 31 at the front.

## Description

### Field of the invention.

The invention relates to a loading system comprising a loading device provided with a conveyor belt and a container provided with a bottom, an upper wall, a front wall, a rear wall and two side walls, of which the rear wall can be opened for unloading the container. The container may be a loose container or form part of a semi-trailer or a truck.

For loading and unloading the container, it is moved with its rear side in front of a load/unload opening of a building. The loading and/or unloading is carried out through this load/unload opening in the building.

### State of the art.

A system of this type is generally known. In the known loading system a conveyor belt is placed in the container spaced from the top wall of the container through the open rear side of the container and by means of this conveyor belt parcels are loaded into the front of the container. During the further loading operation of the container the conveyor belt is slowly moved backwards. The load factor of a container loaded in this manner is sub-optimal, because the loading height is restricted by the height of the conveyor belt above the bottom of the container. Since room is to be kept free between the conveyor belt and the upper wall of the container for parcels to be moved, the container cannot be filled up to the upper wall.

For unloading the container, this container is provided with a further conveyor belt having a width that equals the width of the load area inside the container. The container could also be loaded with this further conveyor belt. However, in that case too the container could not be loaded optimally. Amply before the load reaches the front wall of the container, the conveyor belt should be stopped to avoid parcels that have dropped to the floor for example and ended up in front of the rest of the load being squeezed between the front wall and the rest of the load. As a result, there will remain an open space at the front of the container. Besides, in that case there is a chance of parcels being squeezed together between the side wall of the container and the rest of the load.

### Summary of the invention.

It is an object of the invention to provide a loading system of the type defined in the opening paragraph in which the container can be loaded optimally. For this purpose, the loading system is **characterised in that** the container is provided with a load opening closed by a loading hatch in the front wall or in the upper wall close to the front wall, with the conveyor belt being situated above the container during the loading operation of the container and extending to directly beside the load opening if the load opening is situated in the front wall, or to above the load opening if the load opening is situated in the upper wall, and in which the container is provided with a further conveyor belt that extends between the front wall and the rear wall.

The container is loaded at the front through the load opening while loading can be proceeded with up to the upper wall of the container. The moment the load forms a heap that reaches the upper wall, the further conveyor belt in the container is started, which slowly conveys the load to the back. During this conveying operation the container is further loaded through the load opening while the speed of the conveyor belt is adjusted to the speed at which the container is filled, so that the container is filled up to the upper wall. The moment the load reaches the open rear side of the container, the further conveyor belt is stopped and as the case may be the load at the rear side is manually filled up to the upper wall. In this manner a complete filling of the container and thus an optimal load factor is obtained.

The conveyor belt can extend from a side of the container to above the loading opening. In a preferred embodiment of the loading system according to the invention, however, during the loading of the container, the conveyor belt extends from the rear wall to the front wall of the container or to close to the front wall of the container.

A further embodiment of the loading system according to the invention is **characterised in that** the loading hatch is provided in the front wall of the container and is connected with its bottom edge to the container hingeable around a horizontal hinge pin. For filling the container, the loading hatch is turned open during which operation the loading hatch has an inclined position, so that the load slides into the container via the loading hatch.

### Brief description of the drawing figures.

The invention will be further described below in more detail with reference to an example of embodiment of the loading system according to the invention represented in the drawing figures, in which:
Figure 1 shows a longitudinal section of the loading system; and
Figure 2 shows a front view of the loading system.

### Detailed description of the drawing figures.

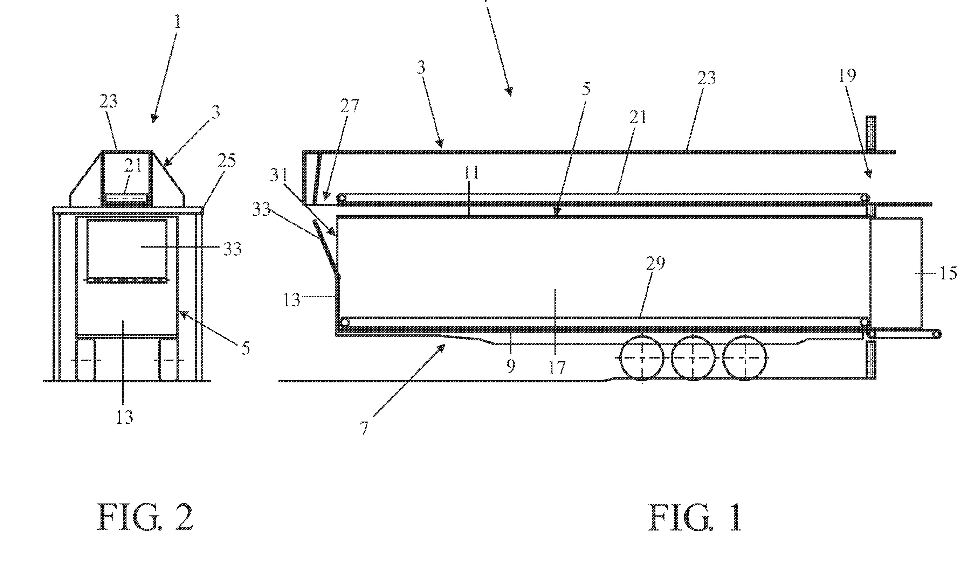

Figs. 1 and 2 show an embodiment of the loading system according to the invention in longitudinal section and front view respectively. The loading system 1 comprises a loading device 3 and a container 5. In this embodiment the container 5 forms part of a semi-trailer 7 of a truck.

The container 5 is provided with a bottom 9, an upper wall 11, a front wall 13, a rear wall 15 and two side walls 17. The rear wall 15 is formed by two doors which are open. For loading and unloading the container 5 it is moved with its rear side before a loading/unloading opening 19 of a building. The loading and/or unloading is effected through this loading/unloading opening in the building.

The loading device 3 has a conveyor belt 21 which extends to a duct 23. This duct 23 is supported by a frame 25 and is situated at a height such that the semi-trailer 7 with container 5 can be manoeuvred under it. The conveyor belt 21 extends from the rear wall 15 up to the front wall 13 of the container. There is an opening 27 in the bottom of the duct close to the front wall and before the front side of the conveyor belt 21, through which opening the load can drop into the container 5.

For the unloading operation the container 5 is provided with a further conveyor belt 29 which extends from the rear wall 15 to the front wall 13 and has a width that equals that of the load area in the container.

The container 5 is furthermore provided with a loading opening 31 in the front wall 13 which can be shut off by a loading hatch 33. The loading hatch 33 is connected with its bottom edge to the container, hingeable around a horizontal hinge pin 35. The container 5 is loaded at the front through the loading opening 31. To this end the loading hatch 33 is turned open into an inclined position, so that the load slides into the container via the loading hatch.

The load is supplied via the conveyor belt 21 and slides into the container 5 via the loading hatch 33. The moment the load forms a heap that reaches the upper wall 11, the further conveyor belt 29 in the container 5 is started, which slowly transports the load to the back. During this transport the container is further loaded through the loading opening 31, while the speed of the further conveyor belt 29 is adjusted to the speed at which the container is filled, so that the container is filled up to the upper wall 11. The moment the load reaches the opened rear side 15 of the container, the further conveyor belt 29 is stopped and as the case may be the load is filled at the rear side up to the upper wall 11. In this way a complete filling of the container 5 and thus an optimal load factor is obtained.

Albeit the invention has been elucidated in the foregoing with reference to the drawing figures, it should be set out that the invention is not by any manner or means restricted to the embodiment shown in the drawing figures. The invention also extends to any embodiments deviating from the embodiment shown in the drawing figures within the spirit and scope defined by the claims.

## Claims

1. A loading system comprising a loading device provided with a conveyor belt and a container provided with a bottom, an upper wall, a front wall, a rear wall and two side walls, of which the rear wall can be opened for unloading the container, **characterised in that** the container is provided with a load opening closed by a loading hatch in the front wall or in the upper wall close to the front wall, with the conveyor belt being situated above the container during the loading operation of the container and extending to directly beside the load opening if the load opening is situated in the front wall, or to above the load opening if the load opening is situated in the upper wall, and in which the container is provided with a further conveyor belt that extends between the front wall and the rear wall.

2. A loading system as claimed in claim 1, **characterised in that** the during the loading of the container the conveyor belt extends from the rear wall up to or close to the front wall of the container.

3. A loading system as claimed in claim 1 or 2, **characterised in that** the loading hatch is provided in the front wall of the container and is connected with its bottom edge to the container, hingeable around a horizontal hinge pin.
